# EUROPÄISCHE PATENTSCHRIFT

(11) **EP 1 997 976 B1**
(45) Veröffentlichungstag und Bekanntmachung des Hinweises auf die Patenterteilung: **15.09.2010**
(21) Anmeldenummer: 08103881.2
(22) Anmeldetag: 09.05.2008
(51) Int. Cl.: E04C 3/09, F16B 12/00, E04C 3/07, E04C 3/04

(54) **Profilschiene**
Profile rail
Rail profilé

(30) Priorität: 30.05.2007 DE 102007000296
(43) Veröffentlichungstag der Anmeldung: 03.12.2008
(73) Patentinhaber: HILTI Aktiengesellschaft, 9494 Schaan (LI)
(72) Erfinder: Birnbaum, Ulrich, 86929, Epfenhausen (DE); Mundwiler, Lukas, 4434, Hoelstein (CH)
(74) Vertreter: Wildi, Roland

(56) Entgegenhaltungen:
- EP-A- 0 798 505
- EP-A- 1 505 705
- WO-A-96/17143
- FR-A- 2 044 101
- GB-A- 2 209 632
- US-A1- 2004 050 011

## Beschreibung

Die Erfindung betrifft eine Profilschiene für eine Abhängung an einem Bauteil mit einer Profillängsachse, mit zwei einander gegenüberliegenden Seitenwänden, die einander gegenüberliegende Wandabschnitte aufweisen, sowie mit einer die beiden Seitenwände verbindenden Verbindungswand, die eine erste Durchführöffnung für die Durchführung eines Befestigungselementes mit einer ersten quer zur Profillängsachse gemessenen lichten Weite aufweist, und mit einer der ersten Durchführöffnung gegenüberliegenden, zweiten Durchführöffnung für die Durchführung des Befestigungselementes mit einer zweiten quer zur Profillängsachse gemessenen lichten Weite aufweist.

Derartige Profilschienen dienen der Befestigung von diversen Installationen, wie Rohrleitungen, Kabelkanälen, Lüftungskanälen oder Beleuchtungen. Die Profilschienen werden dazu mittels Befestigungselementen, wie Gewindestangen, Schrauben, etc., direkt am oder beabstandet zu einem Bauteil, wie einer Decke, Wand, etc., an diesem festgelegt.

Aus der DE 20 2005 006 528 U1 ist eine umfänglich geschlossene Profilschiene bekannt, deren einander zugewandten Seitenwände schwalbenschwanzartige Vertiefungen aufweisen, welche einander gegenüberliegende Wandabschnitte aufweisen. In den die Seitenwände verbindenden, zueinander beabstandeten Verbindungswänden sind jeweils einander gegenüberliegende Durchführöffnungen für Befestigungselemente vorgesehen. Der quer zur Profillängsachse gemessene Abstand der einander gegenüberliegenden Wandabschnitte der Seitenwände zueinander ist grösser als die quer zur Profillängsachse gemessene lichte Weite der Durchführöffnungen.

Nachteilig an der bekannten Lösung ist, dass beim Durchführen des Befestigungselementes zum Festlegen der Profilschiene durch eine der Durchführöffnungen das Befestigungselement an dem Rand der gegenüberliegenden Durchführöffnung anstehen kann, was insbesondere bei einer Überkopf-Montage der Profilschiene an einer Decke als Bauteil den Aufwand zur Montage wesentlich erhöht. Wird der Durchmesser des Befestigungselementes entsprechend kleiner als die quer zur Profillängsachse gemessene lichte Weite der Durchführöffnungen gewählt, so besteht zwar beim Durchführen des Befestigungselementes durch die Profilschiene ein grösserer Spielraum bezüglich der Einführrichtung, jedoch lässt sich dann eine beabstandet zum Bauteil angeordnete Profilschiene nur mit zusätzlichem Aufwand gegen ein Verkanten unter Belastung quer zur Profilachse sichern.

Aus der CH 419 549 ist eine C-förmige Profilschiene bekannt, welche in der die Seitenwände verbindenden Verbindungswand erste Durchführöffnungen für Befestigungselemente aufweist. Diese Profilschiene weist weiter eine der ersten Durchführöffnung gegenüberliegende, sich über die gesamte Längserstreckung der Profilschiene erstreckende Montageöffnung als zweite Durchführöffnung für die Durchführung des Befestigungselementes mit einer zweiten quer zur Profillängsachse gemessenen lichten Weite auf. Der quer zur Profillängsachse gemessene Abstand der einander gegenüberliegenden Wandabschnitte der Seitenwände zueinander ist grösser als die quer zur Profillängsachse gemessene lichte Weite der ersten Durchführöffnungen wie auch der entsprechenden lichten Weite der Montageöffnung.

Nachteilig an der bekannten Lösung ist, dass auch bei dieser Profilschiene beim Durchführen des Befestigungselementes durch eine der Durchführöffnungen das Befestigungselement an dem Rand der gegenüberliegenden Durchführöffnung anstehen kann. Da die beiden einander gegenüberliegenden Durchführöffnungen unterschiedliche, quer zur Profillängsachse gemessene lichte Weiten aufweisen, besteht bei einer zum Bauteil beabstandeten Anordnung zudem auch bei dieser Profilschiene die Gefahr des Verkantens unter Belastung quer zur Profillängsachse ohne zusätzliche aufwändige Massnahmen.

Aus der EP 1 505 705 A1 ist eine im Querschnitt trapezförmige Profilschiene für eine Abhängung an einem Bauteil mit einer Profillängsachse, mit zwei einander gegenüberliegenden Seitenwänden, die einander gegenüberliegende Wandabschnitte aufweisen, sowie mit einer die beiden Seitenwände verbindende Verbindungswand bekannt, die eine erste Durchführöffnung für die Durchführung eines Befestigungselementes mit einer ersten quer zur Profillängsachse gemessenen lichten Weite aufweist. Die schräggestellten Seitenwände und damit deren einander gegenüberliegenden Wandabschnitte weisen einen quer zur Profillängsachse gemessenen Abstand auf, der ausgehend von der Verbindungswand bis zu den freien Enden der Seitenwände kontinuierlich zunimmt. Die freien Enden der schraggestellten Seitenwände sind jeweils nach aussen hin umgebogen und bilden eine der ersten Durchführöffnung gegenüberliegende, zweite Durchführöffnung für die Durchführung des Befestigungselementes mit einer zweiten quer zur Profillängsachse gemessenen lichten Weite aus. Der quer zur Profillängsachse gemessene minimale Abstand der einander gegenüberliegenden Wandabschnitte der Seitenwände zueinander ist kleiner als die zweite quer zur Profillängsachse gemessene lichte Weite der zweiten Durchführöffnung.

Aufgabe der Erfindung ist es, eine Profilschiene für verschiedene Arten von Abhängungen an einem Bauteil zu schaffen, die einfach montierbar ist.

Die Aufgabe ist durch die Merkmale des unabhängigen Anspruchs gelöst. Vorteilhafte Weiterbildungen sind in den Unteransprüchen dargelegt.

Gemäß der Erfindung entspricht der quer zur Profillängsachse gemessene minimale Abstand der einander gegenüberliegenden Wandabschnitte der Seitenwände zueinander höchstens der kleineren lichten Weite der quer zur Profillängsachse gemessenen lichten Weiten der einander gegenüberliegenden Durchführöffnungen. Weisen die Durchführöffnungen unterschiedliche lichte Weiten auf, wird trotzdem eine vorteilhafte seitliche Führung des Befestigungselementes beim Durchführen durch die Profilschiene gewährleistet.

Die einander gegenüberliegenden Wandabschnitte der Seitenwände bilden beim Durchführen des Befestigungselementes eine seitliche Führung für das Befestigungselement im Profilschieneninneren aus. Durch diese seitliche Führung ist das Befestigungselement ohne ein Verhaken oder Verkanten durch die Profilschiene hindurchführbar. Des Weiteren verhindert die geschaffene seitliche Führung im Profilschieneninnern ein Verkippen der am Bauteil festgelegten Profilschiene, wenn diese quer zur Profillängsachse belastet wird. Vorteilhaft ist der quer zur Profillängsachse gemessene minimale Abstand der einander gegenüberliegenden Wandabschnitte der Seitenwände zueinander kleiner als die quer zur Profillängsachse gemessenen lichten Weiten der Durchführöffnungen.

Bevorzugt sind zumindest die ersten Durchführöffnungen Langlöcher, welche eine Justierung der Profilschiene bezüglich des hindurchgeführten Befestigungselementes in Richtung der grösseren lichten Weite der Durchführöffnungen ermöglichen. Vorteilhaft sind die ersten und die zweiten Durchführöffnungen als Langlöcher ausgebildet, wobei die Langlöcher vorteilhaft bezüglich der Profillängsachse gleich ausgerichtet sind. Für eine vorteilhafte Justierbarkeit der Profilschiene verläuft die grössere lichte Weite der Durchführöffnungen vorteilhaft parallel zur Profillängsachse.

Vorzugsweise ist eine zur ersten Verbindungswand beabstandete, die beiden Seitenwände verbindende, zweite Verbindungswand vorgesehen, wobei die erste Durchführöffnung in der ersten Verbindungswand und die zweite Durchführöffnung in der zweiten Verbindungswand vorgesehen sind. Die Verbindungswände und die Seitenwände bilden zusammen eine umfänglich geschlossene Profilform aus, so dass die Profilschiene vorteilhafte Biegefestigkeits- und Torsionswerte aufweist.

Bevorzugt weist zumindest eine der Durchführöffnungen einen ins Profilschieneninnere gerichteten Kragen auf, der eine zusätzliche seitliche Führung beim Durchführen des Befestigungselementes durch die Profilschiene sicherstellt und somit die Montage der Profilschiene an einem Bauteil zusätzlich vereinfacht. Des Weiteren kompensiert der Kragen teilweise die Reduktion der statischen Werte infolge der bereichsweisen Schwächung der entsprechenden Verbindungswand durch die Durchführöffnungen. Der Kragen ist beispielsweise als Durchzug ausgebildet.

Vorzugsweise liegt ein Kragenabschnitt des Kragens zumindest bereichsweise an der Innenseite der Seitenwände an, wodurch die Seitenwände abgestützt werden. Dadurch verkürzt sich die freie Knicklänge der Seitenwände, was sich insbesondere bei einer Profilschiene aus dünnwandigem Material vorteilhaft auf die kritische Knick- und Beullast auswirkt. Vorteilhaft liegt der Kragenabschnitt des Kragens über seine gesamte, bezogen auf die von der entsprechenden Verbindungswand aufgespannte Ebene gemessene Höhe seitlich an der Innenseite der entsprechenden Seitenwand an. Alternativ ist das freie Ende des entsprechenden Kragenabschnitts zur entsprechenden Seitenwand hin ausgerichtet und stützt diese im Wesentlichen an der Kontaktstelle ab.

Vorteilhaft ist die Profilschiene aus Metall und besonders vorteilhaft aus Blech in einem Stanz-/Biegeverfahren und/oder Walzverfahren gefertigt. Dies ermöglicht eine einfache und wirtschaftliche Herstellung der erfindungsgemässen Profilschiene.

Die Erfindung wird nachstehend anhand von zwei Ausführungsbeispielen näher erläutert. Es zeigen:
- Fig. 1: Eine erfindungsgemässe Profilschiene im Grundriss;
- Fig. 2: einen vergrösserten Querschnitt der Profilschiene entlang Linie II-II in Fig. 1; und
- Fig.3: einen Querschnitt eines zweiten Ausführungsbeispiels der erfindungsgemässen Profilschiene.

Grundsätzlich sind in den Figuren gleiche Teile mit den gleichen Bezugszeichen versehen.

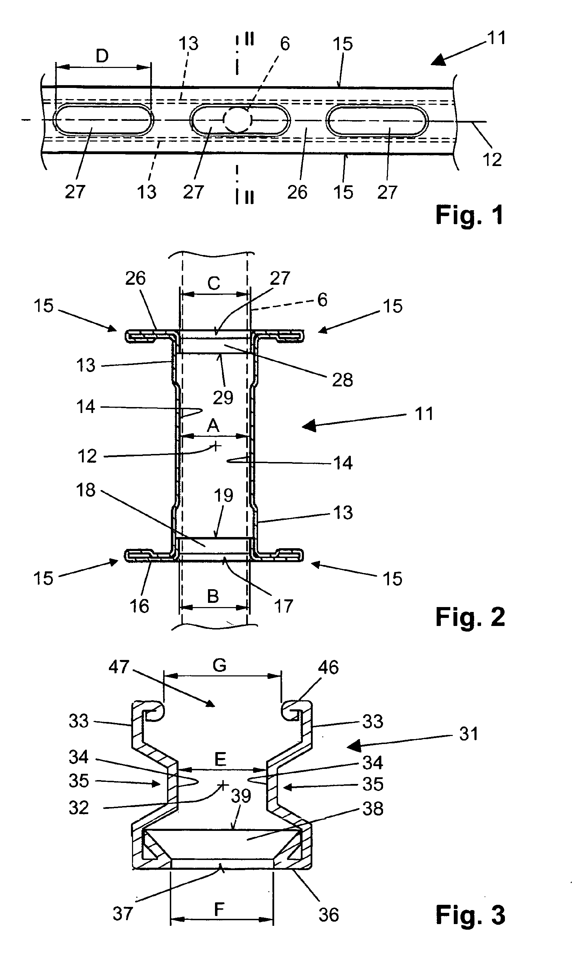

Die in den Figuren 1 und 2 dargestellte, aus einem Blech gefertigte Profilschiene 11 für eine Abhängung an einem Bauteil (hier nicht dargestellt) mit einem Befestigungselement 6 in Form einer Gewindestange weist eine Profillängsachse 12, zwei einander gegenüberliegende Seitenwände 13, die einander gegenüberliegende Wandabschnitte 14 aufweisen, sowie zwei die beiden Seitenwände 13 verbindende Verbindungswände 16 und 26 auf. Die Verbindungswände 16 und 26 sind im Wesentlichen senkrecht zu den von den Seitenwänden 13 aufgespannten Ebenen ausgerichtet. Durch die Anhäufung von Material an den Rändern 15 der Profilschiene 11 ist auch bei einer Profilschiene 11 mit einer reduzierten Blechdicke gegenüber einer umfänglich zumindest bereichsweise geschlossenen Profilschiene ohne Materialanhäufung an den Rändern die Biege- und Torsionssteifigkeit erhöht.

In der ersten Verbindungswand 16 ist eine erste Durchführöffnung 17 mit einer quer zur Profillängsachse 12 gemessenen lichten Weite B und in der zweiten Verbindungswand 26 ist eine zweite Durchführöffnung 27 mit einer quer zur Profillängsachse 12 gemessenen lichten Weite C für die Durchführung des Befestigungselementes 6 durch die Profilschiene 11 vorgesehen, wobei der Betrag der lichten Weite B dem Betrag der lichten Weite C entspricht. Die Durchführöffnungen 17 und 27 sind als Langlöcher ausgebildet, deren grössere lichte Weite D parallel zur Profillängsachse 12 verläuft, und weisen eine kongruente Ausgestaltung in der gleichen Projektion quer zur Profillängsachse 12 auf.

Weiter weisen die Durchführöffnungen 17 und 27 jeweils einen ins Profilschieneninnere gerichteten Kragen 18 und 28 auf, deren freie Ränder 19 und 29 einander zugewandt sind. Jeweils liegen Kragenabschnitte der Kragen 18 und 28 bereichsweise an der Innenseite der Seitenwände 13 an.

Der quer zur Profillängsachse 12 gemessene minimale Abstand A der einander gegenüberliegenden Wandabschnitte 14 der Seitenwände 13 zueinander entspricht höchstens der quer zur Profillängsachse 12 gemessenen lichten Weite B bzw. C der Durchführöffnungen 17 und 27.

In Fig. 3 ist eine zweite Ausführungsform einer erfindungsgemässen Profilschiene 31 als C-förmige Montageschiene gezeigt, die an einer Seite 46 eine über deren gesamte Längserstreckung verlaufende Montageöffnung als zweite Durchführöffnung 47 mit einer quer zur Profillängsachse 32 gemessene lichte Weite G aufweist. In der die Seitenwände 33 verbindenden Verbindungswand 36 sind mehrere zueinander beabstandete Langlöcher als erste Durchführöffnungen 37 mit einer quer zur Profillängsachse 32 gemessene lichte Weite F vorgesehen, die kleiner als die entsprechende lichte Weite G der zweiten Durchführöffnung 47 ist. An den ersten Durchführöffnungen 37 ist jeweils ein Kragen 38 ausgebildet, dessen freie Ränder 39 bereichsweise an der Innenseite der Seitenwände 33 anliegen und sich z. B. an einer in den Seitenwänden 33 ausgebildeten Sicke 35 abstützen können.

Der quer zur Profillängsachse 32 gemessene minimale Abstand E der einander gegenüberliegenden Wandabschnitte 34 der Seitenwände 33 zueinander entspricht höchstens der quer zur Profillängsachse 32 gemessenen lichten Weite F der Durchführöffnungen 37.

## Patentansprüche

1. Profilschiene für eine Abhängung an einem Bauteil mit einer Profillängsachse (12; 32), mit zwei einander gegenüberliegenden Seitenwänden (13; 33), die einander gegenüberliegende Wandabschnitte (14; 34) aufweisen, sowie mit einer die beiden Seitenwände (13; 33) verbindende Verbindungswand (16; 36), die eine erste Durchführöffnung (17; 37) für die Durchführung eines Befestigungselementes (6) mit einer ersten quer zur Profillängsachse (12; 32) gemessenen lichten Weite (B; F) aufweist, und
mit einer der ersten Durchführöffnung (17; 37) gegenüberliegenden, zweiten Durchführöffnung (27; 47) für die Durchführung des Befestigungselementes (6) mit einer zweiten quer zur Profillängsachse (12; 32) gemessenen lichten Weite (C; G), **dadurch gekennzeichnet, dass**
der quer zur Profillängsachse (12; 32) gemessene minimale Abstand (A; E) der einander gegenüberliegenden Wandabschnitte (14; 34) der Seitenwände (13; 33) zueinander höchstens der kleineren lichten Weite (B, C; F) der quer zur Profillängsachse (12; 32) gemessenen lichten Weiten (B, C; F, G) der einander gegenüberliegenden Durchführöffnungen (17, 27; 37, 47) entspricht.

2. Profilschiene nach Anspruch 1, **dadurch gekennzeichnet, dass** zumindest die ersten Durchführöffnungen (17; 37) Langlöcher sind.

3. Profilschiene nach Anspruch 1 oder 2, **dadurch gekennzeichnet, dass** eine zur ersten Verbindungswand (16) beabstandete, die beiden Seitenwände (13) verbindende, zweite Verbindungswand (26) vorgesehen ist, wobei die erste Durchführöffnung (17) in der ersten Verbindungswand (16) und die zweite Durchführöffnung (27) in der zweiten Verbindungswand (26) vorgesehen sind.

4. Profilschiene nach einem der Ansprüche 1 bis 3, **dadurch gekennzeichnet, dass** zumindest eine der Durchführöffnungen (17, 27; 37) einen ins Profilschieneninnere gerichteten Kragen (18,28; 38) aufweist.

5. Profilschiene nach Anspruch 4, **dadurch gekennzeichnet, dass** ein Kragenabschnitt des Kragens (18, 28; 38) zumindest bereichsweise an der Innenseite der Seitenwände (13; 33) anliegt.

## Claims

1. Profile rail with a longitudinal axis (12; 32), for a suspension at a structural component,
with two opposite side walls (13; 33) which have opposing wall sections (14; 34), and with a connecting wall (16; 36) connecting the two side walls (13; 33) which
has a first leadthrough opening (17; 37) for a fixing element (6), with a first internal diameter (B; F) measured at right angles to the profile's longitudinal axis (12; 32), and
with a second leadthrough opening (27; 47) for the fixing element (6), opposite the first leadthrough opening (17; 37), with a second internal diameter (C; G) measured at right angles to the profile's longitudinal axis (12; 32), **characterized in that**
the minimum gap (A; E), measured at right angles to the profile's longitudinal axis (12; 32), between the opposing wall sections (14; 34) of the side walls (13; 33) is not greater than the smaller internal diameter (B, C; F) of the internal diameters (B, C; F, G), measured at right angles to the profile's longitudinal axis (12; 32), of the opposite leadthrough openings (17, 27; 37, 47).

2. Profile rail according to Claim 1, **characterized in that** at least the first leadthrough openings (17; 37) are slotted holes.

3. Profile rail according to Claim 1 or Claim 2, **characterized in that** a second connecting wall (26) connecting the two side walls (13) is provided at a distance from the first connecting wall (16), the first leadthrough opening (17) being provided in the first connecting wall (16) and the second leadthrough opening (27) being provided in the second connecting wall (26).

4. Profile rail according to any one of Claims 1 to 3, **characterized in that** at least one of the leadthrough openings (17, 27; 37) has a collar (18, 28; 38) directed into the interior of the profile rail.

5. Profile rail according to Claim 4, **characterized in that** a portion of the collar (18, 28; 38) rests at least in localized regions on the inside of the side walls (13; 33).

## Revendications

1. Rail profilé pour une suspension à un élément de construction ayant un axe longitudinal de profilé (12 ; 32), comportant deux parois latérales (13 ; 33) opposées l'une à l'autre présentant des parties de paroi (14 ; 34) opposées l'une à l'autre, ainsi qu'une paroi de liaison (16 ; 36) reliant les deux parois latérales (13 ; 33), ladite paroi de liaison comportant une première ouverture de passage (17 ; 37) pour le passage d'un élément de fixation (6) ayant une première largeur d'ouverture (B ; F) mesurée perpendiculairement à l'axe longitudinal de profilé (12 ; 32), et une seconde ouverture de passage (27 ; 47), opposée à la première ouverture de passage (17 ; 37) pour le passage de l'élément de fixation (6) ayant une seconde largeur d'ouverture (C ; G) mesurée perpendiculairement à l'axe longitudinal de profilé (12 ; 32),
**caractérisé en ce que** la distance minimale (A ; E) mesurée perpendiculairement à l'axe longitudinal de profilé (12 ; 32) des parties de paroi (14 ; 34) opposées l'une à l'autre des parois latérales (13 ; 33) correspondent au plus à la plus petite largeur d'ouverture (B, C ; F) des largeurs d'ouverture (B, C ; F, G) mesurées perpendiculairement à l'axe longitudinal de profilé (12 ; 32) des ouvertures de passage (17, 27 ; 37, 47) opposées les unes aux autres.

2. Rail profilé selon la revendication 1, **caractérisé en ce qu'**au moins les premières ouvertures de passage (17 ; 37) sont des trous oblongs.

3. Rail profilé selon la revendication 1 ou 2, **caractérisé en ce qu'**est prévue une seconde paroi de liaison (26), reliant les deux parois latérales (13), espacée de la première paroi de liaison (16), dans lequel la première ouverture de passage (17) est formée dans la première paroi de liaison (16) et la seconde ouverture de passage (27) est formée dans la seconde paroi de liaison (26).

4. Rail profilé selon l'une quelconque des revendications 1 à 3, **caractérisé en ce qu'**au moins une des ouvertures de passage (17, 27 ; 37) comporte une collerette (18, 28 ; 38) dirigée vers l'intérieur du rail profilé.

5. Rail profilé selon la revendication 4, **caractérisé en ce qu'**une partie de collerette (18, 28 ; 38) vient en butée au moins dans certaines zones contre le côté intérieur des parois latérales (13 ; 33).
